# FASCICULE DE BREVET EUROPEEN

(11) **EP 2 817 675 B1**
(45) Date de publication et mention de la délivrance du brevet: **20.04.2016**
(21) Numéro de dépôt: 13704090.3
(22) Date de dépôt: 11.02.2013
(51) Int. Cl.: G04F 10/00, G03B 17/24, G03B 5/08, G03B 41/00, G07C 1/24, H04N 7/08, H04N 7/18, H04N 13/02, G03B 15/00, G03B 35/08

(54) **DISPOSITIF D'AFFICHAGE EN 3D D'UNE IMAGE PHOTOFINISH**
3D FOTOFINISH BILDANZEIGER
3D PHOTOFINISH DISPLAY DEVICE

(30) Priorité: 22.02.2012 EP 12156514
(43) Date de publication de la demande: 31.12.2014
(73) Titulaire: Swiss Timing Ltd., 2606 Corgémont (CH)
(72) Inventeur: RICHARD, Pascal, CH-2606 Corgémont (CH)
(74) Mandataire: Gilligmann, Benoît Philippe
(86) Numéro de dépôt international: PCT/EP2013/052698
(87) Numéro de publication internationale: WO 2013/124180

(56) Documents cités:
- US-A- 3 502 009
- US-A- 4 488 794
- US-A- 5 974 272
- US-A- 6 141 036
- US-A1- 2011 085 789
- US-B1- 6 433 817

## Description

### Domaine technique

La présente invention concerne l'affichage de données chronométrées lors d'une compétition sportive, et plus particulièrement un affichage de type photofinish au niveau d'une ligne d'arrivée.

### Etat de la technique

Dans le cadre de courses sportives chronométrées, et en particulier des courses d'athlétisme, le chronomètre est en général déclenché de manière synchronisée avec l'émission d'un signal acoustique, et arrêté pour chaque concurrent lorsque chacun franchit respectivement la ligne d'arrivée. Il se peut toutefois que la résolution du système de chronométrage, par exemple typiquement le centième de seconde, ne soit pas suffisant pour départager deux concurrents dont le temps mesuré est identique. Pour ce faire, des dispositifs d'assistance au chronométrage sont nécessaires et il existe dans ce but des systèmes opérés manuellement et qui sont basés sur la reconnaissance visuelle d'images prises séquentiellement par une caméra haute définition centrée très précisément au niveau de la ligne d'arrivée. Un opérateur analyse, de manière asynchrone après l'arrivée des concurrents, la séquence des images prises à des instants donnés et correspondant par conséquent à un temps chronométré; cette analyse permet de déterminer ainsi un temps plus précis du franchissement de la ligne de chaque concurrent, par exemple au millième de seconde et de classer les concurrents de manière fiable. Ce type de système d'affichage auxiliaire pour le chronométrage est usuellement appelé « photofinish ».

Un tel type de système d'affichage auxiliaire, connu depuis relativement longtemps, est décrit par exemple dans le document US3502009 relatif à une course de chiens. Le dispositif de type photofinish permet de superposer des valeurs de temps, obtenues à l'aide d'un premier objectif centré sur un dispositif de chronométrage, sur des images des concurrents à l'aide d'un deuxième objectif centré sur la ligne d'arrivée. Le film ainsi développé permet donc de déterminer le premier arrivé à franchir la ligne et son temps de passage.

Un système de type photofinish conventionnel est divulgué par US 6433817 B1.

Pour remédier aux problèmes de masquage mutuel des concurrents, qui peuvent empêcher l'opérateur d'effectuer une analyse pertinente de la série d'images autour du temps chronométré litigieux, les systèmes de type « photofinish » utilisent très souvent plusieurs caméras. Toutefois, en raison de l'alignement précis requis sur la ligne d'arrivée, aucune des caméras utilisées ne peut être décalée latéralement pour résoudre ce problème de masquage; c'est la raison pour laquelle les deux caméras employées sont situées respectivement de part et d'autre de la ligne d'arrivée.

On connaît par ailleurs des systèmes optiques de type stéréoscopique pour l'affichage d'images en trois dimensions, qui permettent un rendu plus convivial et plus intuitif à celui qui les visionne. Ces systèmes stéréoscopiques se basent sur la construction d'une image en relief suivant le schéma cérébral, c'est-à-dire à partir de l'analyse deux images planes prises suivant des axes de vue distincts. Ces systèmes stéréoscopiques utilisent ainsi typiquement des caméras à double objectif, dont l'espacement correspond par exemple à l'espace interoculaire moyen, soit environ 75 à 80 millimètres. Ces systèmes optiques ne sont toutefois malheureusement pas adaptés pour un système de type photofinish en raison du décalage latéral qu'il suppose entre les axes de prise de vue, qui

Il existe par conséquent un besoin pour des systèmes auxiliaires de chronométrage exempts de ces limitations connues.

### Bref résumé de l'invention

Un but de la présente invention est de fournir un dispositif et une méthode permettant l'affichage d'images de type photofinish en 3 dimensions.

Un autre but de la présente invention est fournir un tel dispositif et une telle méthode qui soit simple à implémenter et peu onéreuse.

Ces buts sont atteints notamment grâce à un dispositif d'imagerie pour système de type photofinish, comprenant une première caméra alignée sur une ligne d'arrivée, et caractérisé en ce qu'il comprend une deuxième caméra alignée également sur la ligne d'arrivée et décalée d'une première hauteur par rapport à la première caméra pour l'affichage d'images en trois dimensions de type stéréoscopique.

Ces buts sont également atteints grâce à un premier procédé pour la formation d'une image de type photofinish en trois dimensions, caractérisé en ce qu'il contient les étapes de définition d'une durée de prise de vue T, de synchronisation temporelle d'une première et d'une deuxième caméra, alignées sur la ligne d'arrivée et décalées mutuellement d'une hauteur h, sur un temps de référence To, de formation d'une première image par la première caméra pour ce temps de référence To et de formation d'une deuxième image par la deuxième caméra pour ce même temps de référence To, puis d'agrégation de ces deux images pour former une image de type stéréoscopique.

Des formes d'exécution particulières de l'invention sont définies dans les revendications independantes 1, 7 et dans les revendications dépendantes.

Un avantage de la présente invention est de produire une image de type photofinish en relief de manière simple, sans nécessiter d'outils de traitement d'image complexes, et qui puisse être aisément affichée pour des spectateurs présents dans une enceinte sportive ou des téléspectateurs.

Un autre avantage de la solution est de fournir une architecture modulaire pour la mise en oeuvre d'un système et d'une méthode d'affichage stéréoscopique, nécessitant peu de modifications par rapport aux infrastructures usuelles existantes pour les systèmes de type photofinish.

### Brève description des figures

Des exemples de mise en oeuvre de l'invention avantageux sont indiqués dans la description et illustrés par les figures annexées dans lesquelles:
- les figures 1A et B illustrent respectivement une vue de face, dans l'axe d'une ligne d'arrivée, et de dessus d'une pluralité de caméras utilisées selon un mode de réalisation préférentiel de l'invention;
- la figure 2 illustre un schéma des caméras utilisées ainsi qu'un système de gestion d'images pour la production d'images stéréoscopiques selon un mode de réalisation préférentiel de l'invention;
- la figure 3illustre un schéma des différentes étapes de traitement pour la formation et l'affichage stéréoscopique d'images selon un mode de réalisation préférentiel de l'invention.

### Exemple(s) de modes de réalisation de l'invention

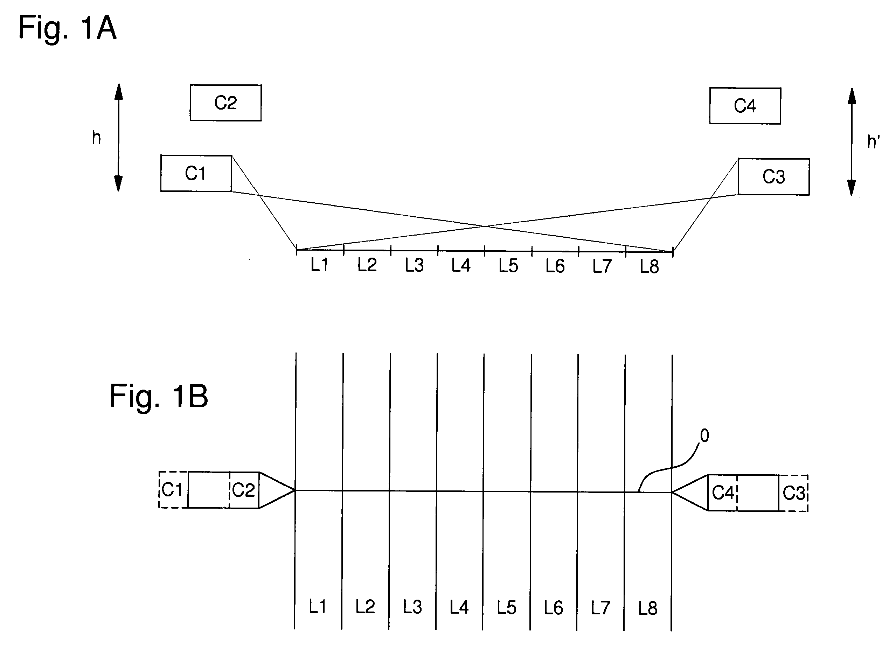

La figure 1A montre une vue de face, dans l'axe d'une ligne d'arrivée, d'une pluralité de caméras utilisées selon un mode de réalisation préférentiel de la présente invention. Sur cette figure on peut distinguer les différents couloirs L1,L2,L3,L4,L5,L6,L7,L8, qui correspondent aux 8 couloirs usuels d'une piste d'athlétisme, ainsi que quatre caméras C1,C2,C3,C4 disposées en hauteur de chaque côtés de la piste d'athlétisme. Selon ce mode de réalisation préférentiel, les images stéréoscopiques sont formées à partir de deux images prises à un même instant de référence par deux caméras décalées en hauteur l'une par rapport à l'autre. Ainsi une première caméra C1 et une deuxième caméra C2, toutes deux alignées sur la ligne d'arrivée, sont mutuellement décalées d'une première hauteur *h* et similairement et une troisième caméra C3 et quatrième caméra C4, toutes deux alignées sur la ligne d'arrivée, sont mutuellement décalées d'une deuxième hauteur *h*'. L'intérêt de disposer de deux paires de caméras situées de part et d'autre de la ligne d'arrivée, c'est-à-dire de former les paires C1-C2 et C3-C4, consiste à pouvoir choisir la paire de caméra la plus avantageuse en fonction de la position des différents concurrents sur la ligne d'arrivée afin d'éviter tout masquage. On pourrait attribuer à une première paire de caméras, par exemple la paire C1-C2, le statut de paire principale, c'est-à-dire la paire de caméras utilisée par défaut par le dispositif d'imagerie selon l'invention, tandis que la deuxième paire de caméras C3-C4 serait utilisée comme paire auxiliaire uniquement en cas de masquage de concurrents sur les images obtenues à partir de la première paire de caméras C1-C2. La figure 1B, illustrant les mêmes huit couloirs L1-L8 ainsi que la ligne d'arrivée 0, montre l'alignement des quatre caméras C1,C2,C3,C4 sur cette ligne d'arrivée 0 ainsi que leur groupement par paires C1-C2 et C3-C4 de part et d'autre de la ligne d'arrivée 0. Les caméras de chaque paire sont représentées avec un léger décalage axial afin de mieux pouvoir les distinguer mutuellement.

Le décalage en hauteur entre les caméras de chacune des paires est choisi, pour des raisons pratiques, largement supérieur à l'espacement interoculaire afin de faciliter leur installation. En pratique, on pourra choisir un premier espacement *h* et un deuxième espacement *h'* de préférence compris entre 40 et 50 centimètres, afin de laisser suffisamment de place pour le montage de la 2^{e} caméra de la paire lorsque la première a déjà été positionnée, et de pouvoir parallèlement corriger le facteur multiplicatif de la distance entre les caméras de chaque paire par rapport à l'espace interoculaire moyen par effet de zoom, c'est-à-dire en modifiant la distance focale de l'objectif de la caméra. Le premier espacement *h* et le deuxième espacement *h'* ne doivent toutefois pas nécessairement être égaux, et pourront être ajustés en fonction des contraintes du lieu où se déroule la compétition, afin de ne requérir aucun ajustement de l'infrastructure existante et ainsi minimiser les contraintes d'encombrement du système d'imagerie proposé.

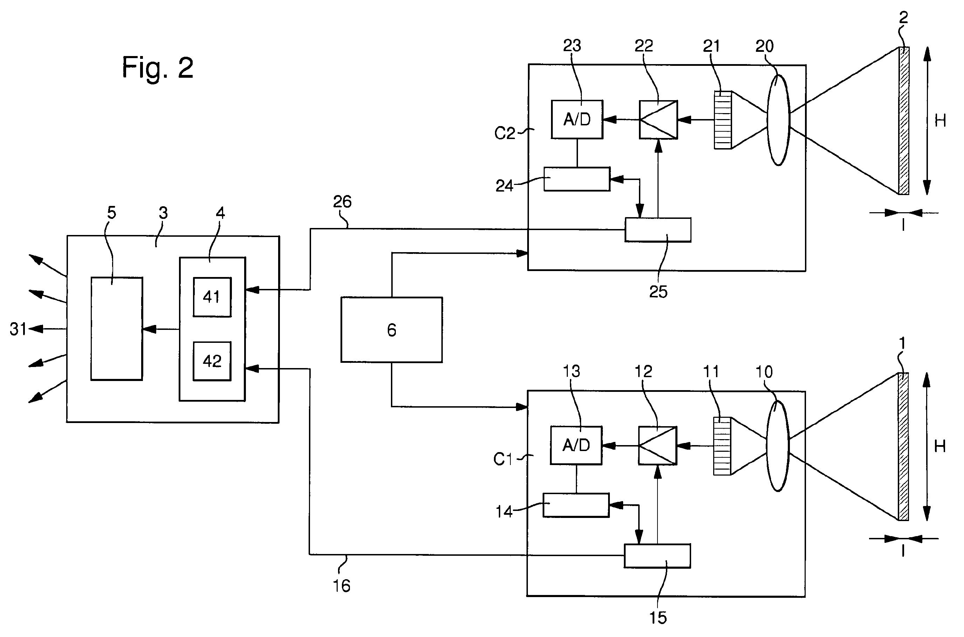

La figure 2 illustre un schéma du dispositif d'imagerie pour système photofinish selon un mode de réalisation préférentiel de l'invention, montrant en détail l'architecture physique des deux caméras C1 et C2, illustrées sur la figure 1 B précédente, et leur interaction avec le système de chronométrage 6 et le système d'affichage stéréoscopique 3.

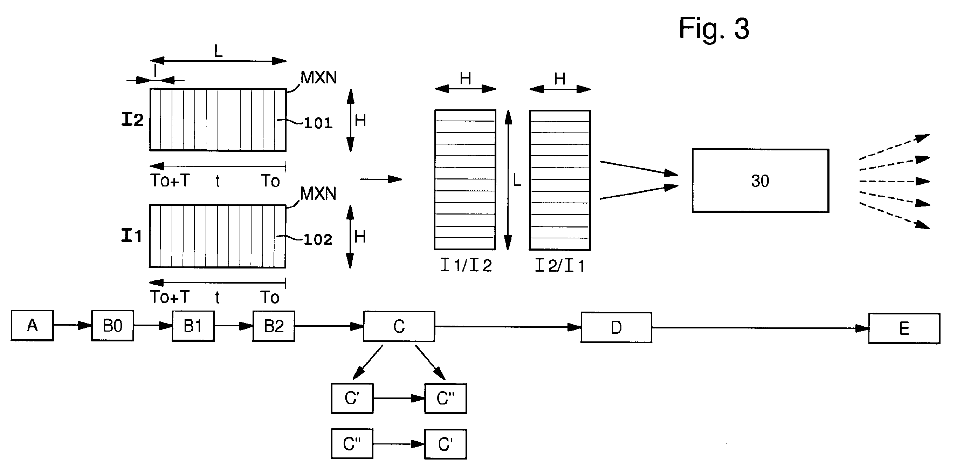

Chacune des deux caméras C1 et C2 comprennent une lentille (référencées respectivement 10 et 20 pour chaque caméra) à l'extrémité d'un objectif permettant de former l'image d'une bande étroite (référencées respectivement 1 et 2 pour chaque caméra, et aussi communément appelées « frames ») de hauteur H et de largeur *l* par l'intermédiaire de capteurs matriciels de type LS-CCD (c'est-à-dire Line-Scan Charge Coupled Device), ou CMOS référencés respectivement 11 et 21 pour chaque caméra C1 et C2, dont la taille peut atteindre plusieurs milliers de pixels. L'objectif est de préférence réglé au niveau de la ligne d'arrivée pour afficher une image d'une hauteur H prédéfinie, ce qui s'effectue à l'aide d'un nombre N de pixels de la matrice, visible sur les figures 3A et 3B suivantes. Le capteur LS-CCD/CMOS peut de préférence consister en une matrice d'une seule colonne de pixels, de telle sorte que la largeur *l* correspondante des bandes d'image 1 et 2 est complètement déterminée en fonction de la hauteur H de l'image à afficher et du nombre N de pixels de la colonne de ce capteur. Selon une variante, on peut utiliser un capteur CCD/CMOS matriciel comportant plusieurs colonnes, dont une seule colonne prédéfinie est utilisée pour former les images au niveau de la ligne d'arrivée.

Un contrôleur-échantillonneur d'images (référencé respectivement 15-25 sur chaque caméra C1,C2) détecte les niveaux de luminosité au niveau de chacun des capteurs LS-CCD/CMOS 11-21 à des intervalles de temps réguliers, puis amplifie les signaux de sortie à l'aide d'amplificateurs de préférence à gain contrôlé (référencés respectivement 12 et 22 sur chacune des caméras C1-C2) et les convertit sous forme numérique à l'aide de convertisseurs analogiques-numériques (A/D, référencés respectivement 13-23 pour chacune des caméras C1 et C2) et les sauvegarde dans une zone de mémoire (référencée respectivement 14-24 pour chacune des caméras C1 et C2). Ainsi une succession de bandes d'images 1 et 2, prises respectivement par chacune des caméras C1 et C2, sont sauvegardées sous forme de colonnes de pixels 101 et respectivement 102 (visibles sur la figure 3A suivante) à une fréquence d'échantillonnage de préférence supérieure ou égale à 1000, de telle sorte que des images correspondant à des temps de référence espacés d'au plus un millième de seconde puissent être formées par agrégation des différentes colonnes de pixels 101, 102. La fréquence d'échantillonnage définit ainsi la précision du chronométrage. Les zones de mémoire (aussi appelées « buffers ») contiennent de préférence plusieurs centaines de mégabytes de mémoire vive, par exemple SDRAM (synchronous dynamic random access memory) pour contenir plusieurs heures d'images.

Afin de garantir la synchronisation mutuelle de chacune des caméras C1 et C2 sur un temps de référence relatif, c'est-à-dire par rapport au départ d'une course, et non pas seulement un temps absolu, elles seront chacune raccordées au système de chronométrage 6. Chacune des colonnes de pixels transmises correspondant à un temps de référence pourront être sauvegardées avec un marqueur (« flag » en Anglais) correspondant à ce temps de référence et permettre ainsi un traitement ultérieur plus facile des données.

La première caméra C1 et la deuxième caméra C2 sont raccordées chacune à un système de gestion d'image 4, comme par exemple un serveur informatique, comprenant un processeur 41 et une unité de mémoire 42 pour traiter les données récupérées en sortie des zones de mémoire 14-24 des caméras C1 et C2 et former une image stéréoscopique 30. Le système de gestion d'image 4 est par ailleurs connecté à un écran de contrôle 5 pour permettre à un opérateur de visionner les images avant de les transmettre, via une ligne de transmission 31 par exemple de type broadcast, à des récepteurs télévisuels (par exemple via un réseau numérique hertzien, conforme à la norme DVB) ou encore à un groupe d'ordinateurs connectés sur Internet via un réseau IP-multicast.

Le système d'affichage stéréoscopique 3 illustré à la figure 2, qui comprend le système de gestion d'image 4 et la connexion à la ligne de transmission 31, permet donc d'une part de former une image stéréoscopique 30 à partir des frames reçues des caméras C1 et C2, et par ailleurs de transmettre cette image pour un affichage sur des récepteurs distants (non représentés sur cette figure).

On comprendra qu'une architecture physique similaire à celle décrite à la figure 2 sera de préférence employée pour les caméras C3 et C4 disposées à l'opposé de la ligne d'arrivée, qui seront également connectées au système de gestion d'images 4 informatique et au système de chronométrage 6. Ces connexions peuvent être basées sur une technologie sans fil de type Wi-Fi selon l'éloignement mutuel des appareils à connecter et le débit nécessaire pour la transmission des données; pour des raisons d'encombrement on cherchera à s'affranchir de tout câblage lorsque celui-ci ne sera pas nécessaire.

La figures 3 montre une variante préférentielle de méthode selon laquelle peut être générée une image stéréoscopique 30 de type photofinish. Le procédé pour la formation d'une image de type photofinish en trois dimensions contient une étape (A) préalable de définition d'une durée de prise de vue (T), qui conditionne la taille de l'image que l'on souhaite afficher, ou plus précisément sa largeur L. En effet, si chaque bande d'image ou frame correspond à une largeur /, la fréquence d'échantillonnage, par exemple tous les millièmes de seconde, ainsi que le temps T de durée de la prise de vue, qui est choisi comme un multiple du millième, comme par exemple une seconde, détermine un nombre de pixels M qui conditionne la largeur L de l'image correspondante. Sur ces figures, l'axe des temps *t* s'étend de la droite vers la gauche à partir d'un instant de référence To choisi qui correspond à l'instant de prise de vue des bandes d'images situées le plus à droite, toutes les autres bandes d'image ayant été prises postérieurement à cet instant de référence. On comprendra toutefois que si les caméras C3 et C4 devaient être utilisées, le sens du déroulement de la course étant alors inversé, l'axe des temps *t* s'étendrait de la gauche vers la droite, c'est-à-dire toujours dans le sens inverse de celui du déroulement de la course.

Comme on peut le voir sur la figure 3, les premières et deuxièmes images prises par les premières et deuxièmes caméras C1 et C2 sont référencées respectivement I1 et I2; elles sont numérisées sous forme d'une matrice de pixels N*M, correspondant à une hauteur H et une largeur L. La matrice de pixel est obtenue par agrégation des différentes colonnes de pixels 101 et 102 correspondant respectivement aux bandes d'images (ou frames) 1 et 2.

Afin que chaque image I1 et I2 de chaque caméra C1 et C2 corresponde à un même instant To, il est nécessaire d'effectuer une étape de synchronisation temporelle (B0) de la première caméra C1 et de la deuxième caméra C2, qui sont toutes deux alignées sur la ligne d'arrivée 0, avant de pouvoir former l'image stéréoscopique 30, car selon ce mode de réalisation préférentiel chacune des images composant l'image stéréoscopique doit correspondre à ce que voit chaque oeil simultanément. Une fois cette synchronisation effectuée grâce à la connexion de chacune des caméras au système de chronométrage 6, on forme la première image I1 obtenue de ladite première caméra C1 pour ledit temps de référence To et la deuxième image 12 obtenue à partir de la deuxième caméra C2 pour le temps de référence To lors d'étapes B1 et B2, effectuées alternativement ou simultanément par le système de gestion d'images 4.

Avant d'agréger les premières et deuxièmes images (I1,I2) pour former une image de type stéréoscopique 30, on pourra effectuer une étape supplémentaire de redressement d'image C afin que la lecture des images affichées soit plus facile. En effet, l'axe des deux caméras C1,C2 - et également celui des caméras C3,C4 côté opposé de la ligne d'arrivée - est vertical dans le plan de la ligne d'arrivée, et il détermine la ligne d'orientation des yeux percevant l'image stéréoscopique. Autrement dit l'image stéréoscopique est formée comme si la première caméra C1 était l'oeil gauche ou droit, et la deuxième caméra C2 était l'autre oeil, ce qui forcerait un téléspectateur à pencher la tête de 90 degrés vers la droite ou la gauche pour voir correctement l'image stéréoscopique 30, formée par les images I1 et 12, sans autre traitement d'image préalable. Ainsi selon une variante préférentielle de l'invention, on effectuera une étape supplémentaire de redressement d'image C, consistant par exemple en des sous-étapes de dépilement C' et de transposition matricielle C" lorsque cette opération de redressement est effectuée par le système de traitement d'image 4 informatique. La sous- étape de dépilement C' permet d'effectuer une symétrie centrale en sauvegardant toutes les colonnes de pixels correspondant aux frames des images I1 et I2 en mode LIFO (last in first out) dans une nouvelle pile de données, tandis que l'opération de transposition matricielle consiste à inverser les lignes et les colonnes de la matrice. Il est aisé de constater que la séquence d'étapes C' suivi de C" permet d'effectuer une rotation de 90 degrés dans le sens anti-horaire de chacune des images, tandis que la séquence d'étapes C" suivi de C' permet d'effectuer une rotation de 90 dans le sens horaire. Le choix de l'une ou l'autre de ces séquences permet ainsi d'assigner virtuellement une caméra à un oeil et déterminer l'axe de vue: l'étape C' suivie de l'étape C" fera correspondre la première caméra C1 à l'oeil droit et redressera les images I1 et I2 pour produire une image stéréoscopique 30 avec vue de face des concurrents et la séquence inverse, c'est-à-dire l'étape C" suivie de l'étape C' fera correspondre la première caméra C1 à l'oeil gauche, avec vue des concurrents de dos. C'est la raison pour laquelle les images obtenues après l'étape de redressement C sont référencées I1/I2 et I2/I1 sur la figure 3, selon la séquence choisie.

Une fois cette étape de redressement effectuée, l'image stéréoscopique 30 peut être formée par le système de gestion d'image informatique 4 par agrégation des deux images redressées lors de l'étape d'agrégation D, puis le système d'affichage stéréoscopique 3 peut émettre, lors d'une étape ultérieure E, l'image stéréoscopique 30 sur un réseau de transmission 31, par exemple de type broadcast, pour un téléaffichage sur des récepteurs distants après vérification par un opérateur sur un écran de contrôle. On comprendra que, pour déterminer le temps de référence To, une itération d'affichage pourra déjà être effectuée par l'opérateur du système photofinish sur l'écran de contrôle 5 ; cette étape préalable permettra par ailleurs de déterminer les masquages éventuels sur la première caméra C1 et la nécessité de basculer sur la paire des troisième et quatrième caméras C3,C4 du côté opposé de la ligne d'arrivée.

Selon le mode de réalisation préférentiel illustré, on utilise donc des moyens de traitement numérique pour redressement d'image avant de former une image stéréoscopique par l'intermédiaire du système de gestion d'images 4 informatique; selon un mode de réalisation alternatif on pourrait imaginer utiliser des moyens optiques de type périscopique avec renvoi à 45 degrés, qui permettraient de supprimer une étape de traitement des données. Afin de ne rien modifier à la structure existante des caméras utilisées au niveau de la ligne d'arrivée, on pourrait utiliser des lunettes périscopiques montées de façon modulaire sur leur objectif.

Bien que les solutions pour la formation d'images stéréoscopiques aient été décrites dans le cadre de compétitions d'athlétisme, on comprendra que le dispositif et la méthode décrits ci-dessus peuvent être employées pour d'autres types de sports, tels que par exemple le cyclisme, le patinage de vitesse ou encore l'aviron sans sortir du cadre de l'invention.

Le dispositif et la méthode ci-dessus présentent par ailleurs l'avantage de ne nécessiter que très peu de modifications de l'architecture physique des systèmes de type photofinish existants, avec simplement l'ajout éventuel de caméras additionnelles pour la capture d'images sous d'autres angles de prise de vue. Ainsi toute l'intelligence du système et de la méthode proposée est transférée dans le back-end de l'infrastructure, c'est-à-dire une partie non visible pour les spectateurs, avec des modules additionnels pour le post-traitement des images photofinish classiques obtenues par le ou les caméras sur la ligne d'arrivée, et des moyens d'affichage stéréoscopiques spécifiques pour former des images en trois dimensions.

## Revendications

1. Dispositif d'imagerie pour système de type photofinish, comprenant une première caméra (C1) alignée sur une ligne d'arrivée (0), et **caractérisé en ce qu'**il comprend
une deuxième caméra (C2) alignée également sur ladite ligne d'arrivée (0), ladite deuxième caméra (C2) étant décalée d'une première hauteur (h) par rapport à ladite première caméra (C1) pour l'affichage d'images en trois dimensions de type stéréoscopique.

2. Dispositif d'imagerie pour système de type photofinish selon la revendication précédente, **caractérisé en ce que** le décalage de hauteur (h) entre lesdites première et deuxième caméra (C1,C2) est supérieur à l'espacement interoculaire.

3. Dispositif d'imagerie pour système de type photofinish selon l'une des revendications précédentes, **caractérisé en ce qu'**il comprend une troisième caméra (C3) alignée également sur ladite ligne d'arrivée (0), disposée du côté opposé de ladite ligne d'arrivée (0) par rapport à ladite première caméra (C1), et une quatrième caméra (C4) alignée également sur ladite ligne d'arrivée (0) et disposée du même côté de la ligne d'arrivée que ladite troisième caméra (C3), ladite quatrième caméra (C4) étant décalée d'une deuxième hauteur (h') par rapport à ladite troisième caméra (C3).

4. Dispositif d'imagerie pour système de type photofinish selon la revendication 1, **caractérisé en ce qu'**il comprend par ailleurs des moyens de redressement d'image, lesdits moyens de redressement d'image étant de type optique ou de traitement numérique.

5. Dispositif d'imagerie pour système de type photofinish selon l'une des revendications précédentes, **caractérisé en ce que** chacune des première et deuxième caméras (C1 ,C2) utilise des capteurs (11,21) de type line scan (LS-CCD/CMOS).

6. Dispositif d'imagerie pour système de type photofinish selon l'une des revendications précédentes, **caractérisé en ce qu'**il comprend un système de gestion d'images (4) informatique connecté d'une part à chacune desdites première et deuxième caméras (C1 ,C2) pour la formation d'une image stéréoscopique (30), et d'autre part à un écran de contrôle (5) et à un réseau de transmission (31).

7. Procédé pour la formation d'une image de type photofinish en trois dimensions, **caractérisé en ce qu'**il contient les étapes de:
- (A) définition d'une durée de prise de vue (T);
- (B0) synchronisation temporelle d'une première caméra (C1), alignée sur une ligne d'arrivée (0), et d'une deuxième caméra (C2), alignée sur ladite ligne d'arrivée (0), ladite deuxième caméra (C2) étant décalée d'une première hauteur (h) par rapport à ladite première caméra (C1) au niveau de ladite ligne d'arrivée (0), sur un temps de référence To;
- (B1) formation d'une première image (11) obtenue de ladite première caméra (C1) pour ledit temps de référence To;
- (B2) formation d'une deuxième image (12) obtenue à partir de ladite deuxième caméra (C2) pour ledit temps de référence To;
- (D) agrégation desdites première et deuxième images (11,12) pour former une image de type stéréoscopique (30).

8. Procédé selon la revendication 7, **caractérisé en ce qu'**il contient une étape supplémentaire de redressement d'image (C).

9. Procédé selon la revendication 8, ladite étape de redressement d'image (C) comprenant une première étape de dépilement (C') et une deuxième sous-étape de transposition matricielle (C").

10. Procédé selon l'une des revendications 7 à 9 **caractérisé en ce qu'**il comprend une étape supplémentaire :
- (E) émission de ladite image de type stéréoscopique (30) sur un réseau de transmission (31) pour un téléaffichage sur des récepteurs distants.

## Patentansprüche

1. Bildgebungsvorrichtung für ein System des Photofinish-Typs, die eine erste Kamera (C1) umfasst, die auf eine Ziellinie (0) ausgerichtet ist, **dadurch gekennzeichnet, dass** sie Folgendes umfasst:
eine zweite Kamera (C2), die ebenfalls auf die Ziellinie (0) ausgerichtet ist, wobei die zweite Kamera (C2) um eine erste Höhe (h) in Bezug auf die erste Kamera (C1) versetzt ist, um Bilder in drei Dimensionen des stereoskopischen Typs anzuzeigen.

2. Bildgebungsvorrichtung für ein System des Photofinish-Typs nach dem vorhergehenden Anspruch, **dadurch gekennzeichnet, dass** der Höhenversatz (h) zwischen der ersten und der zweiten Kamera (C1, C2) größer ist als der Interokularabstand.

3. Bildgebungssystem für ein System des Photofinish-Typs nach einem der vorhergehenden Ansprüche, **dadurch gekennzeichnet, dass** sie eine dritte Kamera (C3) umfasst, die ebenfalls auf die Ziellinie (0) ausgerichtet ist und auf der in Bezug auf die erste Kamera (C1) gegenüberliegenden Seite der Ziellinie (0) angeordnet ist, und eine vierte Kamera (C4) umfasst, die ebenfalls auf die Ziellinie (0) ausgerichtet ist und auf derselben Seite der Ziellinie wie die dritte Kamera (C3) angeordnet ist, wobei die vierte Kamera (C4) um eine zweite Höhe (h') in Bezug auf die dritte Kamera (C3) versetzt ist.

4. Bildgebungsvorrichtung für ein System des Photofinish-Typs nach Anspruch 1, **dadurch gekennzeichnet, dass** sie außerdem Bildverbesserungsmittel umfasst, wobei die Bildverbesserungsmittel vom optischen Typ oder Mittel zur digitalen Bearbeitung sind.

5. Bildgebungsvorrichtung für ein System des Photofinish-Typs nach einem der vorhergehenden Ansprüche, **dadurch gekennzeichnet, dass** sowohl die erste als auch die zweite Kamera (C1, C2) Sensoren (11, 21) des Linienabtasttyps (LS-CCD/CMOS) verwendet.

6. Bildgebungsvorrichtung für ein System des Photofinish-Typs nach einem der vorhergehenden Ansprüche, **dadurch gekennzeichnet, dass** sie ein Bildsteuerungs-Datenverarbeitungssystem (4) umfasst, das einerseits sowohl mit der ersten als auch mit der zweiten Kamera (C1, C2) verbunden ist, um ein stereo-skopisches Bild (30) zu erzeugen, und andererseits mit einem Steuerbildschirm (5) und mit einem Übertragungsnetz (31) verbunden ist.

7. Verfahren zum Erzeugen eines Bildes des Photofinish-Typs in drei Dimensionen, **dadurch gekennzeichnet, dass** es die folgenden Schritte umfasst:
- (A) Definieren einer Bildaufnahmedauer (T);
- (B0) zeitliches Synchronisieren einer ersten Kamera (C1), die auf eine Ziellinie (0) ausgerichtet ist, und einer zweiten Kamera (C2), die auf die Ziellinie (0) ausgerichtet ist, wobei die zweite Kamera (C2) um eine erste Höhe (h) in Bezug auf die erste Kamera (C1) auf Höhe der Ziellinie (0) auf einer Zeitbasis (To) versetzt ist;
- (B1) Erzeugen eines ersten Bildes (I1), das von der ersten Kamera (C1) für die Zeitbasis (To) erhalten wird;
- (B2) Erzeugen eines zweiten Bildes (I2), das anhand der zweiten Kamera (C2) für die Zeitbasis (To) erhalten wird;
- (D) Vereinigen des ersten und des zweiten Bildes (11, 12), um ein Bild (30) des stereoskopischen Typs zu erzeugen.

8. Verfahren nach Anspruch 7, **dadurch gekennzeichnet, dass** es einen zusätzlichen Schritt der Bildverbesserung (C) umfasst.

9. Verfahren nach Anspruch 8, wobei der Bildverbesserungsschritt (C) einen ersten Entstapelungsschritt (C') und einen zweiten Matrixtranspositions-Unterschritt (C") umfasst.

10. Verfahren nach einem der Ansprüche 7 bis 9, **dadurch gekennzeichnet, dass** es den folgenden zusätzlichen Schritt umfasst:
- (E) Aussenden des Bildes (30) des stereoskopischen Typs zu einem Übertragungsnetz (31) für die Fernanzeige auf entfernten Empfängern.

## Claims

1. Imaging device for a photo finish type system, including a first camera (C1) aligned on a finish line (0), and **characterized in that** the device includes:
a second camera (C2) also aligned on said finish line (0) and offset by a first height (h) from said first camera (C1) for the display of three dimensional stereoscopic images.

2. Imaging device for a photo finish system according to the preceding claim, **characterized in that** the height offset (h) between said first and second cameras (C1, C2) is greater than the interocular space.

3. Imaging device for a photo finish system according to any of the preceding claims, **characterized in that** the device includes a third camera (C3) also aligned on said finish line (0), arranged on the opposite side of said finish line (0) with respect to said first camera (C1), and a fourth camera (C4) also aligned on said finish line (0) and arranged on the same side of the finish line as said third camera (C3), said fourth camera (C4) being offset by a second height (h') from said third camera (C3).

4. Imaging device for a photo finish system according to claim 1, **characterized in that** the device further includes image rectifying means, said image rectifying means being optical or digital processing type means.

5. Imaging device for a photo finish system according to any of the preceding claims, **characterized in that** each of the first and second cameras (C1, C2) uses line scan (LS-CCD/CMOS) sensors (11, 21)

6. Imaging device for photo finish system according to any of the preceding claims, **characterized in that** the device includes a computer image management system (4) connected, on the one hand, to each of said first and second cameras (C1, C2) to form a stereoscopic image (30) and, on the other hand, to a monitoring screen (5) and to a transmission network (31).

7. Method for forming a three dimensional photo finish image, **characterized in that** the method contains the steps of:
- (A) defining a shot duration (T);
- (B0) time synchronising a first camera (C1), aligned on a finish line (0), and a second camera (C2), aligned on said finish line (0), wherein said first and second cameras (C1, C2) is offset by a height (h) on said finish line (0), on a reference time To;
- (B1) forming a first image (I1) obtained from said first camera (C1) for said reference time To;
- (B2) forming a second image (12) obtained from said second camera (C2) for said reference time To;
- (D) aggregating said first and second images (I1, I2) to form a stereoscopic image (30).

8. Method according to claim 7, **characterized in that** the method contains an additional image rectifying step (C).

9. Method according to claim 8, said image rectifying step (C) including a first reverse stacking sub-step (C') and a second matrix transposition sub-step (C").

10. Method according to any of claims 7 to 9, **characterized in that** the method includes an additional step:
- (E) transmitting said stereoscopic image (30) on a transmission network (31) for remote display on remote receivers.
